# EUROPÄISCHE PATENTSCHRIFT

(11) **EP 3 363 077 B1**
(45) Veröffentlichungstag und Bekanntmachung des Hinweises auf die Patenterteilung: **13.02.2019**
(21) Anmeldenummer: 17723098.4
(22) Anmeldetag: 12.05.2017
(51) Int. Cl.: H01Q 13/10, H01Q 1/32, H01Q 1/52, H01Q 21/28

(54) **KRAFTFAHRZEUG MIT ANTENNENANORDNUNG**
MOTOR VEHICLE HAVING AN ANTENNA ARRANGEMENT
VÉHICULE À MOTEUR DOTÉ D'UN ENSEMBLE ANTENNE

(30) Priorität: 07.06.2016 DE 102016006975
(43) Veröffentlichungstag der Anmeldung: 22.08.2018
(73) Patentinhaber: Audi AG, 85045 Ingolstadt (DE)
(72) Erfinder: REICHARDT, Lars, 85055 Ingolstadt (DE)
(86) Internationale Anmeldenummer: PCT/EP2017/061432
(87) Internationale Veröffentlichungsnummer: WO 2017/211536

(56) Entgegenhaltungen:
- EP-A1- 1 487 052
- EP-A1- 2 806 497
- WO-A1-00/69021
- DE-U1-202011 110 175

## Beschreibung

Die Erfindung betrifft ein Kraftfahrzeug, das eine Antennenanordnung zum Austauschen von elektromagnetischen Funkwellen mit zumindest einem Objekt in einer Umgebung und eine Steuerschaltung zum Betreiben der Antennenanordnung in einem vorbestimmten Betriebsfrequenzintervall aufweist.

Ein Kraftfahrzeug kann über Funkempfang und bidirektionale Funkverbindungen Informationen mit Objekten in der Umgebung austauschen. Durch die steigenden Anforderungen an die Menge und Qualität und Datenrate solcher kabelloser Dienste nimmt die Anzahl der in einem Kraftfahrzeug zu verbauenden Antennen stetig zu. Demgegenüber steht der Anspruch, die Antennen möglichst versteckt zu verbauen. Um aber einen möglichst richtungsunabhängigen und unblockierten Empfang rund um das Kraftfahrzeug zu haben, wie es zum Beispiel für Bluetooth, Telefonie und Internetanbindungen nötig ist, sowie auch einen Empfang von Satellitendiensten zu ermöglichen, ist der bevorzugte Verbauort für eine Antennenanordnung das Fahrzeugdach. Baut man allerdings mehrere, unabhängig voneinander betriebene Antennen nebeneinander in einem Dachantennenmodul ein, so beeinflussen sich die Antennen im Betrieb gegenseitig.

Ein Dachantennenmodul der beschriebenen Art ist zum Beispiel aus der DE 199 41 476 A1 bekannt. Dieses Antennenmodul wird ohne eine Kabelanbindung auf einem Außenblech eines Fahrzeugdaches befestigt. Eine Übertragung von Signalen erfolgt kapazitiv durch das Außenblech hindurch. Das Antennenmodul kann mehrere unterschiedliche Antennentypen aufweisen.

Aus der DE 10 2010 012 615 A1 ist ein Steuergerät für ein Kraftfahrzeug bekannt, dessen Gehäuse aus Metall gebildet ist. Das Steuergerät kann Funkwellen aussenden, wobei das Gehäuse als Antenne genutzt wird, indem eine Aussparung des Gehäuses als Schlitzantenne fungiert.

Aus der US 2007/0216587 A1 ist ein Antennensystem bekannt, das in ein Gehäuse eingebaut ist, von welchem Teile als Wellenführung für eine Funkwelle genutzt werden, die von einer Antenne in dem Gehäuse erzeugt wird.

Weitere Antennensysteme für Fahrzeuge sind aus der WO 00/69021, sowie der DE 20 2011 110 175 U1 und der EP 1 487 052 A1 bekannt.

Der Erfindung liegt die Aufgabe zugrunde, in einem Kraftfahrzeug eine Antenne mit geringem zusätzlichen Bauraumbedarf bereitzustellen.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Durch die Erfindung ist ein Kraftfahrzeug bereitgestellt. Das Kraftfahrzeug weist in bekannter Weise ein Außenblech aus einem elektrisch leitfähigen Material auf, also ein Außenblech, das zum Beispiel aus Stahl oder Aluminium gebildet ist. Das Außenblech grenzt einen Innenraum des Kraftfahrzeugs zu einer Umgebung des Kraftfahrzeugs hin ab. Eine andere Bezeichnung für ein solches Außenblech ist auch Außenhaut. Das Außenblech ist insbesondere als Dach oder A-Säule oder B-Säule oder C-Säule oder Kofferraumklappe oder Tür des Kraftfahrzeugs ausgestaltet.

Eine Antennenanordnung des Kraftfahrzeugs ist dazu eingerichtet, elektromagnetische Funkwellen mit zumindest einem Objekt in der Umgebung auszutauschen. Das Austauschen von Funkwellen kann sowohl das Aussenden von Funkwellen hin zu dem zumindest einen Objekt und/oder das Empfangen von Funkwellen von dem zumindest einen Objekt umfassen. Die Antennenanordnung weist hierzu eine vorbestimmte Richtcharakteristik auf. Zum Betreiben der Antennenanordnung ist eine Steuerschaltung bereitgestellt. Die Steuerschaltung betreibt die Antennenanordnung in einem vorbestimmten Betriebsfrequenzintervall. Beispielsweise kann die Antennenanordnung in einem Betriebsfrequenzintervall von 700 MHz bis 3 GHz betrieben werden. Die Antennenanordnung kann eine einzelne Antenne oder mehrere Antennen aufwiest, die gekoppelt oder unabhängig voneinander durch die Steuerschaltung betrieben werden können. Durch die Steuerschaltung wird dazu ein elektrisches Signal in der Antennenanordnung erzeugt, damit diese eine elektromagnetische Welle oder Funkwelle aussendet. Zusätzlich oder alternativ dazu kann durch die Steuerschaltung ein elektrisches Signal, dass durch eine Funkwelle in der Antennenanordnung erzeugt wird, abgegriffen und in das Kraftfahrzeug weitergeleitet werden.

Um nun die Antennenanordnung besonders kompakt auszugestalten und/oder mit geringem zusätzlichen Bauraumbedarf, ist erfindungsgemäß vorgesehen, dass die Antennenanordnung zumindest eine Schlitzantenne umfasst. Eine Schlitzantenne ist bereitstellbar, indem in einem elektrisch leitfähigen Körper, z.B. einer Platte, ein Schlitz oder Spalt gebildet wird, also eine Durchgangsöffnung, die eine längliche Form aufweist, beispielsweise eine Rechteckform. Bei dem erfindungsgemäßen Kraftfahrzeug ist die zumindest eine Schlitzantenne in dem Außenblech als jeweiliger Schlitz bereitgestellt oder ausgebildet. Es ist also kein zusätzliches Bauteil vorgesehen, sondern das Außenblech selbst ist geschlitzt ausgestaltet. Die Schlitzlänge jedes Schlitzes entspricht bevorzugt einer halben Wellenlänge und/oder einer viertel Wellenlänge einer jeweiligen Frequenz des Betriebsfrequenzintervalls. Mit anderen Worten ist zumindest eine Schlitzantenne auf die Steuerschaltung beziehungsweise auf das Betriebsfrequenzintervall abgestimmt.

Es ist erfindungsgemäß also vorgesehen, in dem Außenblech eine Durchgangsöffnung bereitzustellen. Die Schlitzform eines Schlitzes einer Schlitzantenne kann hierbei gerade, geknickt oder gekrümmt sein. Der Schlitz kann mit anderen Worten gerade ausgestaltet sein, beispielsweise in Form eines Rechtecks, oder gekrümmt sein oder eine Abzweigung aufweisen oder eine Abwicklung oder einen Radius. Die Kanten des Außenblechs können im Bereich des Schlitzes in rechten Winkeln zueinander angeordnet sein oder in einem anderen Winkel oder auch über Rundungen verbunden sein. Wesentlich ist, dass die Schlitzlänge, also die Länge entlang einer Längserstreckungsrichtung des Schlitzes, in der beschriebenen Weise auf die Wellenlänge zumindest einer Frequenz des Betriebsfrequenzintervalls abgestimmt ist. Bei einer geknickten Schlitzform wird die Schlitzlänge entlang des Knickes, also nicht diagonal abgekürzt, gemessen. Eine absolute, maximale Abmessung des Schlitzes ist dabei insbesondere kürzer als 40 cm, insbesondere kürzer als 20 cm.

Zum Bereitstellen eines Schlitzes in dem Außenblech kann der Schlitz beispielsweise gestanzt oder ausgeschnitten werden. Zum Ausschneiden kann zum Beispiel ein Laserschnittverfahren verwendet werden. Der Schlitz ist dann vollständig von dem elektrisch leitenden Material des Außenblechs umgeben oder durch dieses abgegrenzt oder begrenzt. Die Geometrie der jeweiligen Schlitzantenne ist insbesondere auf das Betriebsfrequenzintervall dahingehend abgestimmt, dass ein Wirkungsgrad der Schlitzantenne für zumindest eine Frequenz des Betriebsfrequenzbereichs größer als 30 Prozent, bevorzugt größer als 40 Prozent, ist. In dem Schlitz der jeweiligen Schlitzantenne ist bevorzugt Luft oder ein anderes Dielektrikum oder elektrisch isolierendes Material angeordnet.

Das erfindungsgemäße Kraftfahrzeug weist den Vorteil auf, dass zumindest eine Antenne der Antennenanordnung zum Beispiel im Bereich eines Dachantennenmoduls bereitgestellt werden kann, ohne dass hierzu innerhalb des Dachantennenmoduls Bauraum für die Antenne bereitgestellt werden muss. Stattdessen kann das Außenblech des Fahrzeugdaches die Schlitzantenne oder mehrere Schlitzantennen aufweisen, die dann durch die Steuerschaltung betrieben werden können, die zum Beispiel in dem Dachantennenmodul angeordnet sein kann.

Zu der Erfindung gehören auch vorteilhafte Weiterbildungen, durch deren Merkmale sich zusätzliche Vorteile ergeben.

Durch die zumindest eine Schlitzantenne kann eine Richtcharakteristik der Antennenanordnung ausgebildet sein, bei welcher für zumindest eine Frequenz aus dem Betriebsfrequenzintervall eine Nullstelle in eine Richtung einer von der jeweiligen Schlitzantenne unabhängig durch die Steuerschaltung betriebenen weiteren Antenne der Antennenanordnung ausgerichtet ist. Dies dient zur Entkopplung der zumindest einen Schlitzantenne von der weiteren Antenne. Beispielsweise kann als die weitere Antenne ein Monopol oder eine Stabantenne bereitgestellt sein. Durch die beschriebene Richtcharakteristik wird diese weitere Antenne nicht oder nur geringfügig von Funkwellen der zumindest einen Schlitzantenne beaufschlagt oder beeinträchtig, so dass beim Senden mittels der zumindest einen Schlitzantenne keine oder nur geringfügig Sendeleistung in die weitere Antenne eingetragen oder eingeprägt wird. Hierdurch kann ein Abstand zwischen der weiteren Antenne und der zumindest einen Schlitzantenne entsprechend gering gewählt werden, insbesondere kleiner als 20 Zentimeter.

Durch die zumindest eine Schlitzantenne kann auch eine Richtcharakteristik ausgebildet sein, bei welcher für zumindest eine Frequenz aus dem Betriebsfrequenzintervall ein Sendebereich und/oder ein Empfangsbereich der Antennenanordnung durch den jeweiligen Schlitz der Schlitzantenne hindurch in den Innenraum des Kraftfahrzeugs und dabei zugleich auch in die Umgebung des Kraftfahrzeugs ausgerichtet ist. Hierdurch kann mittels der zumindest einen Schlitzantenne eine Doppelversorgung bereitgestellt werden. So kann diese Richtcharakteristik zum Beispiel dazu genutzt werden einen Datenaustausch zwischen einem WLAN-Router des Kraftfahrzeugs einerseits und sowohl einem im Innenraum des Kraftfahrzeugs befindlichen mobilen Endgerät als auch einem in der Umgebung des Kraftfahrzeugs befindlichen Gerät (beispielsweise einer fest oder stationär installierten Kamera für eine Einparkhilfe) zu ermöglichen. Das genannte mobile Endgerät kann z.B. ein Smartphone und/oder ein Tablet-PC und/oder eine Smartwatch sein.

Bevorzugt ist vorgesehen, dass die Antennenanordnung ein Gehäuse aufweist, das an einer Außenseite des Außenblechs angeordnet ist. Der zumindest eine Schlitz, durch welchen jeweils eine Schlitzantenne gebildet ist, ist hierbei in einem von dem Gehäuse zur Umgebung hin abgedeckten Auflagebereich des Gehäuses angeordnet. Ist das Gehäuse also zum Beispiel auf einem Dach des Kraftfahrzeugs angeordnet, so befindet sich der zumindest eine Schlitz unterhalb des Gehäuses. Hierdurch wird mittels des Gehäuses der zumindest eine Schlitz zur Umgebung hin abgedichtet.

Die Erfindung ist insbesondere im Zusammenhang mit der Verwendung eines Antennenmoduls vorteilhaft, also eines einstückigen Bauteils. Das besagte Gehäuse kann zum Beispiel Bestandteil des besagten Antennenmoduls sein, insbesondere eines Dachantennenmoduls. Hierbei kann zumindest eine Anschlussleitung der Steuerschaltung über eine Durchgangsöffnung des Außenblechs von dem Innenraum des Kraftfahrzeugs in das Gehäuse geführt sein. Die zumindest eine Anschlussleitung kann beispielsweise ein Koaxialkabel umfassen, um ein Sendesignal aus dem Innenraum zu der Steuerschaltung hin zu übertragen und/oder ein über die Antennenanordnung empfangenes Signal als elektrisches Empfangssignal in den Innenraum zu übertragen. Hierbei kann nun vorgesehen sein, dass diese Durchgangsöffnung selbst als eine Schlitzantenne ausgestaltet ist. Mit einer Worten ist die Steuerschaltung dazu eingerichtet, die Durchgangsöffnung als Schlitzantenne zu betreiben. Hierzu kann in die Durchgangsöffnung zum Beispiel auch zusätzlich ein elektrisch leitfähiges Material eingefügt sein, um hierdurch zumindest eine Kante des Schlitzes der Schlitzantenne zu bilden. Zumindest eine weitere Kante des Schlitzes kann durch das Außenblech selbst gebildet sein. Es kann aber auch vorgesehen sein, dass kein zusätzliches elektrisch leitfähiges Material zum Bilden der Schlitzantenne in der Durchgangsöffnung angeordnet ist.

Bei der Erfindung ist aber insbesondere vorgesehen, dass zumindest ein von der Durchgangsöffnung verschiedener Schlitz zusätzlich oder alternativ als Schlitzantenne durch die Steuerschaltung betreibbar ist. Mit anderen Worten gibt es zusätzlich zu der Durchgangsöffnung zumindest einen Schlitz in dem Außenblech, welcher jeweils eine Schlitzantenne der Antennenanordnung bildet oder darstellt.

Jede Schlitzantenne kann auf unterschiedliche Weise durch die Steuerschaltung betrieben oder genutzt werden. So sieht eine Ausführungsform der Erfindung vor, dass die Steuerschaltung dazu eingerichtet ist, in einem durch die Steuerschaltung bewirkten Betrieb der Antennenanordnung die zumindest eine Schlitzantenne über eine Speiseleitung direkt als Strahler bei einer Frequenz, die in dem Betriebsfrequenzintervall liegt, anzuregen. Hierzu ist die Steuerschaltung dazu eingerichtet, über eine jeweilige Speiseleitung ein Wechselspannungssignal galvanisch oder kapazitiv oder induktiv in einen den jeweiligen Schlitz der zumindest einen Schlitzantenne begrenzenden Rand einzuspeisen (Senden) und/oder das Wechselspannungssignal von dort abzugreifen (Empfangen). Zum Bereitstellen der zumindest einen Speiseleitung kann die Steuerschaltung eine Leiterplatte (PCB - printed circuit board) aufweisen. Eine Speiseleitung kann durch zumindest eine Leiterbahn der Leiterplatte gebildet sein. Im Zusammenhang mit dem Dachantennenmodul kann diese Leiterplatte in dem Dachantennenmodul bereitgestellt oder angeordnet sein.

Die zumindest eine Schlitzantenne stellt für die jeweilige Speiseleitung einen Abschlusswiderstand dar. Insbesondere ist vorgesehen, dass die Anpassung der Antenne gleich dem Wert der Leitungsimpedanz der Speiseleitung selbst ist. Hierzu kann ein Wert eines Abschlusswiderstands des Schlitzes selbst an die Leitungsimpedanz angepasst sein. Alternativ dazu kann eine Anpassschaltung bereitgestellt sein, über welche der Schlitz an die Leitung angepasst ist. Hierdurch kann die Impdedanz über ein Anpassnetzwerk der Anpassschaltung transformiert werden. Bevorzugt liegt der Impedanzwert in einem Bereich von 30 Ohm bis 100 Ohm.

Zusätzlich oder alternativ kann die Steuerschaltung auch dazu eingerichtet sein, zumindest eine Schlitzantenne indirekt zu betreiben. Die Steuerschaltung ist dabei dazu eingerichtet, bei zumindest einer Frequenz, die in dem Betriebsfrequenzintervall liegt, die zumindest eine Schlitzantenne indirekt als einen Direktor oder Reflektor oder als eine Apertur zu betreiben. Mit anderen Worten ist zumindest eine weitere Antenne bereitgestellt, beispielsweise eine Stabantenne oder ein Monopol, dessen elektromagnetisches Feld mit der zumindest einen Schlitzantenne wechselwirkt, um hierdurch die beschriebene Richtcharakteristik zu erhalten. Dabei stellt die zumindest eine Schlitzantenne einen Direktor/Reflektor/eine Apertur dar.

Das erfindungsgemäße Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine schematische Darstellung einer perspektivischen Ansicht eines Dachantennenmoduls, das auf einem Dach an einem Außenblechs des Kraftfahrzeugs befestigt wird;
- Fig. 3: eine schematische Darstellung einer Schlitzantenne, die in dem Außenblech des Daches des Kraftfahrzeugs unterhalb des Dachantennenmoduls bereitgestellt ist; und
- Fig. 4: eine schematische Darstellung einer Draufsicht auf das Dachantennenmodul von Fig. 2 zusammen mit einer Richtcharakteristik, die mittels der Schlitzantenne von Fig. 3 bereitgestellt sein kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

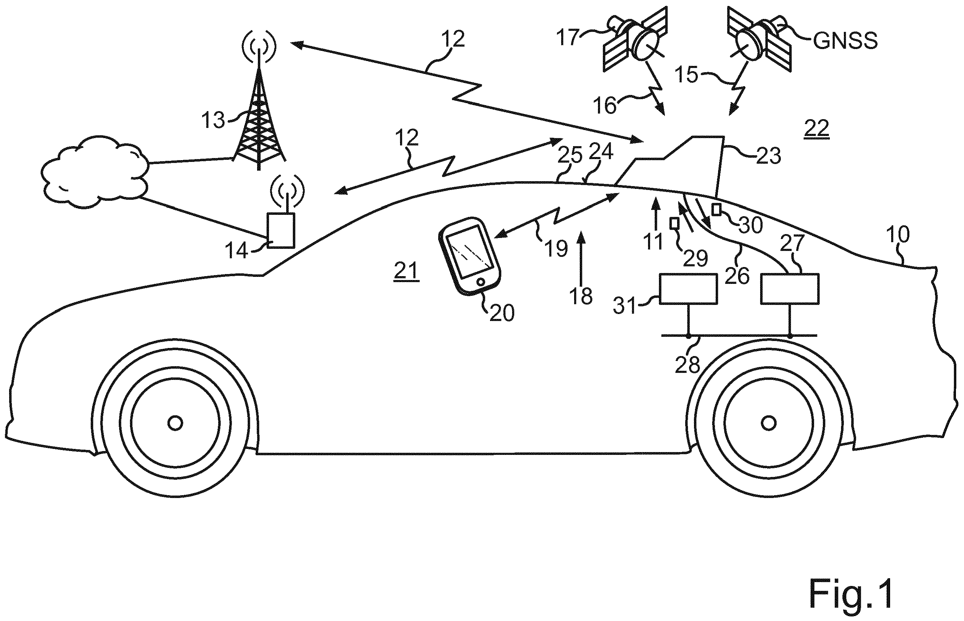

Fig. 1 zeigt ein Kraftfahrzeug 10, bei dem es sich beispielsweise um einen Kraftwagen, insbesondere einen Personenkraftwagen, handeln kann. Das Kraftfahrzeug 10 kann eine Antennenanordnung 11 aufweisen, mittels welcher eine Funkverbindung 12 zwischen dem Kraftfahrzeug 10 und einem Mobilfunknetz 13 und/oder zwischen dem Kraftfahrzeug 10 und einem WLAN-Router 14 bereitgestellt oder hergestellt werden kann. Zusätzlich kann vorgesehen sein, dass über die Antennenanordnung 11 ein Positionssignal 15 eines GNSS (Global Navigation Satellite System), beispielsweise des GPS (Global Positioning System) empfangen wird. Zusätzlich oder alternativ dazu kann vorgesehen sein, dass ein Broadcast-Signal 16 aus einem Satellitenradio 17 empfangen wird. Es kann auch vorgesehen sein, dass mittels der Antennenanordnung 11 für eine Doppelversorgung 18 eine Funkverbindung mit einem mobilen Endgerät 20 bereitgestellt oder hergestellt wird, welches sich in einem Innenraum 21 des Kraftfahrzeugs 10 befinden kann. Dagegen stellen das Mobilfunknetz 13, der WLAN-Router 14, das GNSS und das Satellitenradio 17 jeweils ein Objekt dar, das in einer Umgebung 22 des Kraftfahrzeugs 10 angeordnet ist.

Zum Aussenden der beschriebenen Funksignale und zum Empfangen dieser Funksignale kann die Antennenanordnung ein Dachantennenmodul 23 aufweisen, das auf einem Dach 24 des Kraftfahrzeugs 10 montiert sein kann. Das Dach 24 kann mittels eines Außenblechs 25 des Kraftfahrzeugs 10 gebildet oder bereitgestellt sein. Das Dachantennenmodul 23 kann über eine Anschlussleitung 26 mit einer Fahrzeugkomponente 27 verschaltet sein. Die Fahrzeugkomponente 27 kann zum Beispiel ein Gateway für zumindest ein kabelgebundenes Kommunikationsnetzwerk 28 sein. Das zumindest eine Kommunikationsnetzwerk 28 kann zum Beispiel ein Ethernet-Netzwerk und/oder einen CAN-Bus (CAN-Controller Area Network) umfassen. Die Antennenanordnung 11 wandelt Sendesignale 29 aus der Fahrzeugkomponente 27 in die beschriebenen Funksignale um. Des Weiteren werden durch die Antennenanordnung 11 empfangene Funksignale in elektrische Empfangssignale 30 für die Fahrzeugkomponente 27 umgewandelt. Die Sendesignale 29 und die Empfangssignale 30 kann die Fahrzeugkomponente 27 über das zumindest eine Kommunikationsnetzwerk 28 mit zumindest einer weiteren Fahrzeugkomponente 31 austauschen, zum Beispiel mit einem Infotainmentsystem (Information-Unterhaltungssystem).

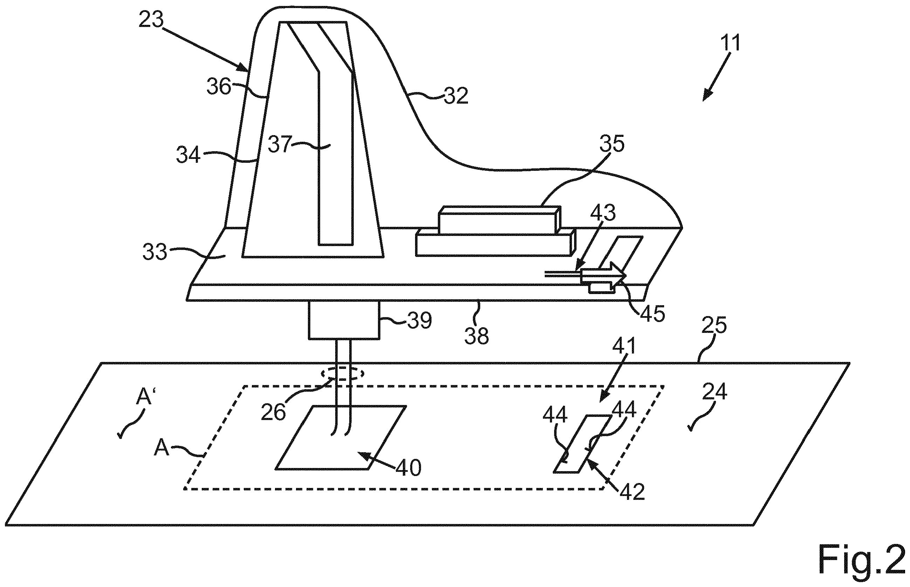

Fig. 2 zeigt die Antennenanordnung 11. Das Dachantennenmodul 23 kann eine Kappe oder ein Gehäuse 32 aufweisen, in welchem eine Steuerschaltung 33 angeordnet sein kann, durch welche die Antennenanordnung 11 betrieben werden kann. Die Antennenanordnung 11 kann zum Beispiel eine erste Antenne 34 und eine zweite Antenne 35 aufweisen. In dem gezeigten Beispiel ist die erste Antenne 34 als eine Monopolstruktur ausgestaltet. Sie kann eine Finne 36 aufweisen, an welcher der Monopol als Metallstreifen 37 angeordnet sein kann, sodass der Metallstreifen 37 senkrecht von einer Ebene des Daches 24 absteht. Die Finne 34 kann dabei aus einem Kunststoff gefertigt sein. Auch das Gehäuse 32 kann aus einem Kunststoff gefertigt sein. Die Antenne 35 kann zum Beispiel eine Patchantenne sein, um die beschriebenen Satellitensignale zu empfangen.

Die Steuerschaltung 33 kann als eine Leiterplatte ausgestaltet sein. Über die Steuerschaltung 33 können die Antennen 34, 35 mit dem Anschlusskabel 26 gekoppelt sein. Die Steuerschaltung 33 kann zum Betreiben der Antennen 34, 35 in an sich bekannter Weise ausgestaltet sein.

Das Dachantennenmodul 23 kann einen Boden 38 aufweisen, der zum Beispiel aus Metall gebildet sein kann. Ein Berührbereich des Bodens 38 auf dem Dach 24 stellt einen Auflagebereich A an einer Außenseite A' des Außenblechs 25 dar. An dem Boden 38 kann ein Stutzen 39 angeordnet sein, welcher zum Befestigen des Dachantennenmoduls 23 auf dem Dach 24 in eine Durchgangsöffnung 40 in dem Außenblechs 35 des Daches 34 gesteckt sein kann.

Die Antennenanordnung 11 kann eine weitere Antenne umfassen, die zwar ebenfalls durch die Steuerschaltung 33 betrieben werden kann, die aber nicht Bestandteil des Dachantennenmoduls selbst sein muss. Bei dieser weiteren Antenne kann es sich um eine Schlitzantenne 41 handeln, die als ein Schlitz 42 in dem Außenblechs 25 des Daches 24 selbst ausgebildet sein kann. Die Steuerschaltung 33 kann eine Speiseleitung 43 aufweisen, über welche ein elektrische Wechselspannung an Rändern 44 des Schlitzes 42 eingespeist oder angelegt oder erzeugt werden kann. Hierdurch ergibt sich ein Einspeisepunkt 45 der Schlitzantenne 41. Die Speiseleitung 43 kann mit den Rändern 44 galvanisch oder kapazitiv oder induktiv gekoppelt sein. Die Anregung der Schlitze 41 kann dann direkt (galvanisch, kapazitiv, induktiv) erfolgen. Es kann aber auch eine indirekt Anregung (mittels Apertur-Kopplung, parasitärer Kopplung, als Direktor, als Reflektor) erfolgen.

Die Schlitze können dabei ebenfalls auch nur als ein Teil einer Antenne wirken, also korreliert oder kombiniert mit einer weiteren Antenne betrieben werden.

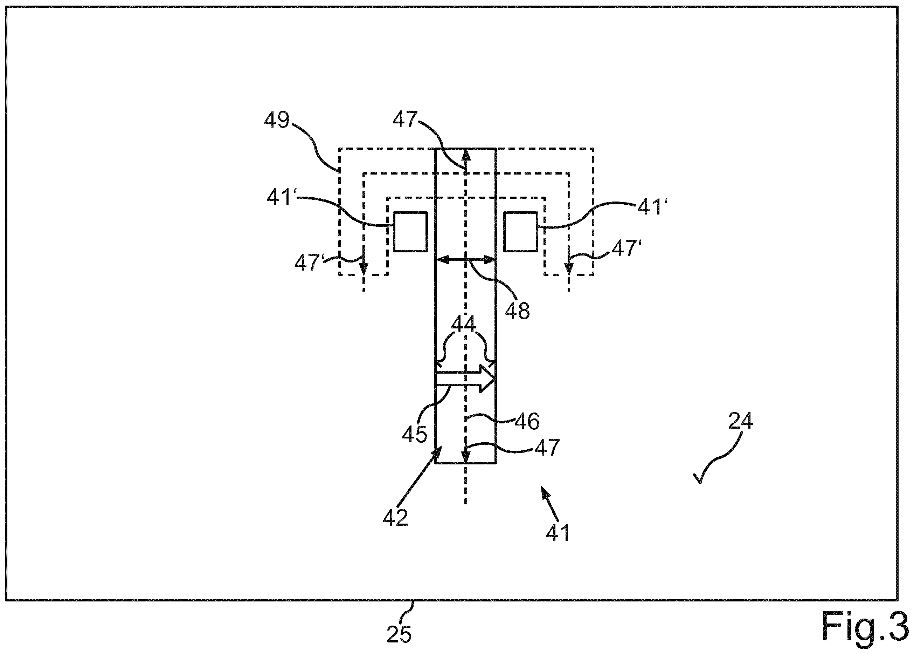

Fig. 3 zeigt eine Draufsicht auf die Schlitzantenne 41. Der Schlitz 42 stellt eine Durchgangsöffnung in dem Außenblechs 25 dar. Der Schlitz 42 weist eine Längserstreckung 46 auf, entlang welcher eine Schlitzlänge 47 des Schlitzes 42 gemessen werden kann. In der in Fig. 3 veranschaulichten Ausführungsform weist der Schlitz eine Rechteckform auf, wobei die Schlitzlänge 47 im Verhältnis zur Schlitzbreite 48 quer zur Schlitzlänge 47 mindestens um den Faktor 2, insbesondere um den Faktor 3 kleiner ist.

Fig. 3 zeigt auch eine alternative Ausgestaltung 49 des Schlitzes 42, bei welcher der Schlitz 42 ein gegabeltes oder verzweigtes Ende aufweist, wobei in Fig. 3 veranschaulicht ist, dass hierbei die Schlitzlänge 47 als Schlitzlänge 47' zum Beispiel entlang der Mittellinie des Schlitzes 42 gemessen werden kann.

Die Schlitzlänge 47, 47' liegt in einem Bereich, welcher einer halben und/oder einer viertel Wellenlänge einer jeweiligen Frequenz eines Betriebsfrequenzintervalls entspricht, mit welchem die Steuerschaltung 33 die Antennenanordnung 11 betreibt.

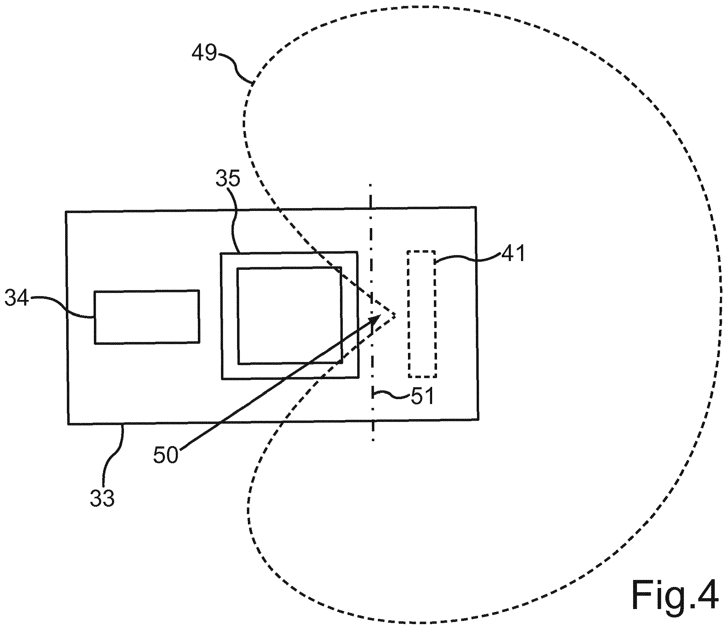

Fig. 4 veranschaulicht, eine Richtcharakteristik 49, wie sie mittels der Schlitzantenne 41 beim Aussenden und/oder Empfangen von Funkwellen ausgebildet werden kann. Die Richtcharakteristik 49 kann eine Nullstelle 50 aufweisen, die in Richtung der Antenne 34 und/oder der Antenne 35 ausgerichtet sein kann. Hierdurch ist eine Entkopplung 51 zwischen der Schlitzantenne 41 und den Antennen 34, 35 bewirkt. Die Kopplung 51 ist in Fig. 4 symbolisch durch einen Trennstrich dargestellt.

Zusätzlich zu der Schlitzantenne 41 kann vorgesehen sein, dass zumindest ein elektrisch leitfähiges Zusatzelement 41' bereitgestellt ist, welches wie z.B. der Monopol 37 eine erhabene Struktur auf dem Außenblech 35 darstellt. Es kann sich beispielsweise jeweils um einen Metallstab oder um ein gebogenes Blechstück oder ein Stanzbiegeteil handeln. Hierdurch kann die Richtcharakteristik 49 für zumindest eine Frequenz aus dem Betriebsfrequenzintervall eingestellt oder verändert werden.

Bei dem Kraftfahrzeug 10 sind somit Antennenschlitze (dargestellt ist der Übersichtlichkeit halber nur einer) in das Dach eingefügt. Jeder Schlitz wird dann als Antenne (bevorzugt lediglich für nur einen Funkdienst oder eine Funkverbindung eines Typs) genutzt. Der große Vorteil, der sich daraus ergibt, ist, dass sich so eine Antennenrichtcharakteristik 29 realisieren lässt, die in Richtung der übrigen Antennen oder Strahler 34, 35, wie zum Beispiel einen Telefonstrahler, eine Polstelle oder Nullstelle 50 aufweist.

Somit können die gezeigten Antennen, die separat oder unabhängig voneinander betrieben werden sollen, auf engem Raum, d.h. der Fläche auf dem Dach (25), entkoppelt und betrieben werden.

Die Richtcharakteristik 49 kann zusätzlich oder alternativ vorsehen, dass auch die Funkverbindung 19 zu dem Endgerät 20 im Innenraum 21 mittels des Schlitzes 42 als Schlitzantenne 41 bereitgestellt wird.

Somit kann durch Vorsehen einer Durchgangsöffnung oder eines Schlitzes 42 im Außenblechs 25 eines Daches 24 des Kraftfahrzeugs 10 eine Schlitzantenne bereitgestellt werden. Anstelle der gezeigten einfachen rechteckigen Schlitzform kann eine Schlitzstruktur bereitgestellt werden, die einen oder mehrere Schlitze umfasst. Sie kann in einem metallischen, elektrisch leitfähigen Außenblech des Kraftfahrzeugs 10 bereitgestellt werden und über eine geeignete Speisung zum Abstrahlen von Funkwellen in dem Betriebsfrequenzintervall angeregt werden. Die Struktur kann dabei Abzweigungen, Radien oder Abwicklungen aufweisen.

Vorgesehen ist hierbei bevorzugt auch, dass mittels des Dachantennenmoduls 23 die Schlitzstruktur zur Umgebung 22 hin auch abgedichtet wird. Hierzu ist die Schlitzantenne 41 in dem Auflagebereich A angeordnet.

Die eine Schlitzstruktur kann mittels Stanztechnik oder Lasertechnik oder einer anderen Aufbautechnik in einem Dachhimmel eines Kraftfahrzeugs, also in dessen Außenblechs 25, eingebracht werden.

Die Doppelnutzung als Befestigung der Dachantenne am Dachhimmel durch das Außenblechs 25 ist dabei denkbar, wie auch die Übertragbarkeit dieses Ansatzes auf andere Bauräume, beispielsweise eine A-Säule oder einen Kotflügel oder eine Fahrzeugtür.

Eine solche Konstruktion bietet die Vorteile, dass eine gute Antennenposition genutzt werden kann, hierbei aber kein zusätzlicher Halter für eine Antenne konstruiert werden muss und Antennen aufgebaut werden können, die sowohl den Außenraum der Umgebung 22 als auch den Fahrgastraum im Innenraum 21 ausleuchten (zum Beispiel für Bluetooth und/oder WLAN). Die beschriebene Schlitzantenne im Bauraum der Dachantenne bietet den Vorteil der freien Anordnung weiterer Antennen auf der beschriebenen Bodenplatte 38. Ferner ist über eine solche Schlitzstruktur im Außenblechs der Einfluss auf Satellitenantennen gering.

Insgesamt zeigt das Beispiel, wie durch die Erfindung eine oder mehrere Schlitzantennenstrukturen in einem Kraftfahrzeug bereitgestellt und genutzt werden können.

## Patentansprüche

1. Kraftfahrzeug (10) aufweisend:
- ein aus elektrisch leitfähigem Material gebildetes Außenblech (25), das einen Innenraum (21) des Kraftfahrzeugs (10) zu einer Umgebung (22) hin abgrenzt,
- eine Antennenanordnung (11) zum Austauschen von elektromagnetischen Funkwellen (12, 15, 16) mit zumindest einem Objekt (13,14,17, GNSS) in der Umgebung (22), wobei die Antennenanordnung (11) eine vorbestimmte Richtcharakteristik (49) aufweist, und
- eine Steuerschaltung (33) zum Betreiben der Antennenanordnung (11) in einem vorbestimmten Betriebsfrequenzintervall,
- wobei die Antennenanordnung (11) zumindest eine Schlitzantenne (41) umfasst, die in dem Außenblech (25) als ein jeweiliger Schlitz (42) bereitgestellt ist,
**dadurch gekennzeichnet, dass**
durch die zumindest eine Schlitzantenne (41) eine Richtcharakteristik (49) ausgebildet ist, bei welcher für zumindest eine Frequenz aus dem Betriebsfrequenzintervall zur Entkopplung (51) eine Nullstelle (50) in eine Richtung einer von der jeweiligen Schlitzantenne (41) unabhängig durch die Steuerschaltung (33) betriebenen weiteren Antennen (34, 35) der Antennenanordnung ausgerichtet ist.

2. Kraftfahrzeug (10) nach einem der vorhergehenden Ansprüche, wobei durch die zumindest eine Schlitzantenne (41) eine Richtcharakteristik (49) ausgebildet ist, bei welcher für zumindest eine Frequenz aus dem Betriebsfrequenzintervall zur Doppelversorgung (18) ein Sendebereich und/oder ein Empfangsbereich der Antennenanordnung (11) durch den jeweiligen Schlitz (42) der Schlitzantenne (41) hindurch sowohl in den Innenraum (21) als auch in die Umgebung (22) ausgerichtet ist.

3. Kraftfahrzeug (10) nach einem der vorhergehenden Ansprüche, wobei die Steuerschaltung (33) als ein Antennenmodul (23), insbesondere ein Dachantennenmodul, ausgestaltet ist, das außen an dem Außenblech (25) montiert ist.

4. Kraftfahrzeug (10) nach einem der vorhergehenden Ansprüche, wobei die Antennenanordnung (11) ein an einer Außenseite des Außenblechs (25) angeordnetes Gehäuse (32) aufweist und der zumindest eine Schlitz (42) in einem von dem Gehäuse (32) zur Umgebung (22) hin abgedeckten Auflagebereich des Gehäuses (22) angeordnet ist.

5. Kraftfahrzeug (10) nach Anspruch 4, wobei zumindest eine Anschlussleitung (26) der Steuerschaltung (33) über eine in dem Außenblech (25) bereitgestellte Durchgangsöffnung (40) von dem Innenraum (21) zu dem Gehäuse (32) geführt ist und die Steuerschaltung (33) dazu eingerichtet ist, die Durchgangsöffnung (40) als eine Schlitzantenne zu betreiben.

6. Kraftfahrzeug (10) nach einem der vorhergehenden Ansprüche, wobei die Steuerschaltung (33) dazu eingerichtet ist, in einem durch die Steuerschaltung (33) bewirkten Betrieb der Antennenanordnung (11) bei einer Frequenz in dem Betriebsfrequenzintervall die zumindest eine Schlitzantenne (41) über ein Speiseleitung (43) direkt als Strahler anzuregen und hierzu über eine jeweilige Speiseleitung (43) ein Wechselspannungssignal galvanisch oder kapazitiv oder induktiv in einen den jeweiligen Schlitz (42) der zumindest einen Schlitzantenne (42) begrenzenden Rand (44) einzuspeisen und/oder von dort abzugreifen.

7. Kraftfahrzeug (10) nach Anspruch 6, wobei die zumindest eine Schlitzantenne (41) eine Anpassung aufweist, die gleich dem Wert einer Leitungsimpedanz der Speiseleitung selbst ist.

8. Kraftfahrzeug (10) nach einem der vorhergehenden Ansprüche, wobei die Steuerschaltung (33) dazu eingerichtet ist, in einem durch die Steuerschaltung (33) bewirkten Betrieb der Antennenanordnung (11) bei zumindest einer Frequenz in dem Betriebsfrequenzintervall die zumindest eine Schlitzantenne (41) indirekt als einen Direktor oder Reflektor oder eine Apertur zu betreiben.

9. Kraftfahrzeug (10) nach einem der vorhergehenden Ansprüche, wobei der jeweilige Schlitz (42) jeder Schlitzantenne (41) in das Außenblech (25) gestanzt oder geschnitten ist.

## Claims

1. Motor vehicle (10) having:
- an outer plate (25) formed from an electrically conductive material, which delimits an interior (21) of the motor vehicle (10) towards an environment (22),
- an antenna arrangement (11) for exchanging electromagnetic radio waves (12, 15, 16) with at least one object (13, 14, 17, GNSS) in the environment (22), wherein the antenna arrangement (11) has a predetermined directional characteristic (49), and
- a control circuit (33) for operating the antenna arrangement (11) in a predetermined operating frequency interval,
- wherein the antenna arrangement (11) comprises at least one slot antenna (41), which is provided in the outer plate (25) as a respective slot (42),
**characterised in that**
a directional characteristic (49) is formed by the at least one slot antenna (41), in which for at least one frequency from the operating frequency interval for the decoupling (51) a zero point (50) is aligned in a direction of a further antenna (34, 35) of the antenna arrangement operated by the control circuit (33) independently of the respective slot antenna (41).

2. Motor vehicle (10) according to any one of the preceding claims, wherein a directional characteristic (49) is formed by the at least one slot antenna (41), in which for the at least one frequency from the operating frequency interval for the double supply (18) a transmission range and/or a reception range of the antenna arrangement (11) is aligned through the respective slot (42) of the slot antenna (41) both into the interior (21) as well as into the environment (22).

3. Motor vehicle (10) according to any one of the preceding claims, wherein the control circuit (33) is designed as an antenna module (23), in particular as a roof antenna module, which is mounted outside of the outside plate (25).

4. Motor vehicle (10) according to any one of the preceding claims, wherein the antenna arrangement (11) has a housing (32) arranged on an outer side of the outside plate (25) and the at least one slot (42) is arranged in a bearing area of the housing (32) covered from the housing (22) towards the environment (22).

5. Motor vehicle (10) according to claim 4, wherein at least one connecting line (26) of the control circuit (33) is guided via a through-opening (40) provided in the outer plate (25) from the interior (21) to the housing (32) and the control circuit (33) is configured to operate the through-opening (40) as a slot antenna.

6. Motor vehicle (10) according to any one of the preceding claims, wherein the control circuit (33) is configured in an operation of the antenna arrangement (11) effected by the control circuit (33) at a frequency in the operating frequency interval to excite the at least one slot antenna (41) via a supply line (43) directly as a radiator and for this purpose via a respective supply line (43) to supply an alternating voltage signal galvanically or capacitively or inductively into an edge (44) limiting the respective slot (42) of the at least one slot antenna (42) and/or to tap it from there.

7. Motor vehicle (10) according to claim 6, wherein the at least one slot antenna (41) has an adjustment, which is equal to the value of the line impedance of the supply line itself.

8. Motor vehicle (10) according to any one of the preceding claims, wherein the control circuit (33) is configured to operate the at least one slot antenna (41) indirectly as a director or reflector or an aperture in an operation of the antenna arrangement (11) effected by the control circuit (33) at at least a frequency in the operating frequency interval.

9. Motor vehicle (10) according to any one of the preceding claims, wherein the respective slot (42) of each slot antenna (41) is stamped or cut into the outer plate (25).

## Revendications

1. Véhicule à moteur (10) présentant :
- une tôle extérieure (25) formée d'un matériau électroconducteur, qui délimite un espace intérieur (21) du véhicule à moteur (10) par rapport à un environnement (22),
- un ensemble antenne (11) pour l'échange d'ondes radio électromagnétiques (12, 15, 16) avec au moins un objet (13, 14, 17, GNSS) dans l'environnement (22), dans lequel l'ensemble antenne (11) présente une caractéristique directionnelle (49) prédéterminée, et
- un circuit de commande (33) pour le fonctionnement de l'ensemble antenne (11) dans un intervalle de fréquence de fonctionnement prédéterminé,
- dans lequel l'ensemble antenne (11) comprend au moins une antenne à fentes (41), qui est fournie dans la tôle extérieure (25) en tant qu'une fente (42) respective,
**caractérisé en ce que**
une caractéristique directionnelle (49) est réalisée par l'au moins une antenne à fentes (41), pour laquelle, pour au moins une fréquence de l'intervalle de fréquence de fonctionnement pour le découplage (51), un point zéro (50) est orienté dans une direction d'une autre antenne (34, 35) de l'ensemble antenne exploitée par le circuit de commande (33) indépendamment de l'antenne à fentes (41) respective.

2. Véhicule à moteur (10) selon l'une quelconque des revendications précédentes, dans lequel une caractéristique directionnelle (49) est réalisée par l'au moins une antenne à fentes (41), pour laquelle, pour au moins une fréquence de l'intervalle de fréquence de fonctionnement pour la double alimentation (18), une zone d'émission et/ou une zone de réception de l'ensemble antenne (11) sont orientées à travers la fente (42) respective de l'antenne à fentes (41) aussi bien dans l'espace intérieur (21) que dans l'environnement (22).

3. Véhicule à moteur (10) selon l'une quelconque des revendications précédentes, dans lequel le circuit de commande (33) est configuré en tant que module d'antenne (23), en particulier module d'antenne de toit, qui est monté à l'extérieur de la tôle extérieure (25).

4. Véhicule à moteur (10) selon l'une quelconque des revendications précédentes, dans lequel l'ensemble antenne (11) présente un boîtier (32) disposé au niveau d'un côté extérieur de la tôle extérieure (25) et l'au moins une fente (42) est disposée dans une zone d'appui du boîtier (22) recouverte par rapport à l'environnement (22) par le boîtier (32).

5. Véhicule à moteur (10) selon la revendication 4, dans lequel au moins une ligne de raccordement (26) du circuit de commande (33) est guidée de l'espace intérieur (21) au boîtier (32) par le biais d'une ouverture de passage (40) fournie dans la tôle extérieure (25) et le circuit de commande (33) est agencé pour faire fonctionner l'ouverture de passage (40) en tant qu'antenne à fentes.

6. Véhicule à moteur (10) selon l'une quelconque des revendications précédentes, dans lequel le circuit de commande (33) est agencé pour exciter, dans un fonctionnement de l'ensemble antenne (11) provoqué par le circuit de commande (33) à une fréquence dans l'intervalle de fréquence de fonctionnement, l'au moins une antenne à fentes (41) par le biais d'une ligne d'alimentation (43) directement en tant qu'émetteur et pour alimenter un signal de tension alternative de manière galvanique ou capacitive ou inductive dans un bord (44) délimitant la fente (42) respective de l'au moins une antenne à fentes (42) par le biais d'un câble d'alimentation (43) respectif et/ou pour le prélever de là.

7. Véhicule à moteur (10) selon la revendication 6, dans lequel l'au moins une antenne à fentes (41) présente une adaptation, qui est égale à la valeur d'une impédance de ligne de la ligne d'alimentation proprement dite.

8. Véhicule à moteur (10) selon l'une quelconque des revendications précédentes, dans lequel le circuit de commande (33) est agencé pour faire fonctionner, dans un fonctionnement de l'ensemble antenne (11) provoqué par le circuit de commande (33) à au moins une fréquence dans l'intervalle de fréquence de fonctionnement, l'au moins une antenne à fentes (41) indirectement en tant que directeur ou réflecteur ou ouverture.

9. Véhicule à moteur (10) selon l'une quelconque des revendications précédentes, dans lequel la fente (42) respective de chaque antenne à fentes (41) est poinçonnée ou découpée dans la tôle extérieure (25).
